# EUROPÄISCHE PATENTSCHRIFT

(11) **EP 1 546 163 B1**
(45) Veröffentlichungstag und Bekanntmachung des Hinweises auf die Patenterteilung: **12.07.2006**
(21) Anmeldenummer: 03798158.6
(22) Anmeldetag: 12.09.2003
(51) Int. Cl.: C07F 9/53, C07F 9/46, C07F 9/32, C07F 9/30, C07F 9/40, C07F 9/38

(54) **VERFAHREN ZUR HERSTELLUNG VON ACYLPHOSPHINOXIDEN**
METHOD FOR THE PRODUCTION OF ACYLPHOSPHINE OXIDES
PROCEDE DE PRODUCTION D'OXYDES D'ACYLPHOSPHINES

(30) Priorität: 24.09.2002 DE 10244684
(43) Veröffentlichungstag der Anmeldung: 29.06.2005
(73) Patentinhaber: BASF Aktiengesellschaft, 67056 Ludwigshafen (DE)
(72) Erfinder: MAASE, Matthias, 67346 Speyer (DE); MASSONNE, Klemens, 67098 Bad Dürkheim (DE)
(86) Internationale Anmeldenummer: PCT/EP2003/010150
(87) Internationale Veröffentlichungsnummer: WO 2004/029063

(56) Entgegenhaltungen:
- EP-A- 0 007 508
- US-A- 2 659 747
- AL'FONSOV V.A. ET AL.: "S-Acetyl phosphorothioites: synthesis, isomerism, and some reactions" JOURNAL OF GENERAL CHEMISTRY USSR., Bd. 58, Nr. 8, - 20. Januar 1989 (1989-01-20) Seiten 1548-1553, XP002266089 CONSULTANTS BUREAU. NEW YORK., US
- SLUGGETT G. W. ET AL.: "(2,4,6-Trimethyl- benzoyl)diphenylphosphine oxide photo- chemistry. A direct time-resolved spectro- scopic study of both radical fragments" JOURNAL OF THE AMERICAN CHEMICAL SOCIETY., Bd. 117, Nr. 18, - 1995 Seiten 5148-5153, XP002266090 AMERICAN CHEMICAL SOCIETY, WASHINGTON, DC., US ISSN: 0002-7863
- LINDNER E. ET AL.: "Synthese und Stabilisierung von (Benzoyl- und Pentafluorbenzoyloxy)diphenylphosphan und Vergleich mit den entsprechenden isomeren Aroyldiphenylphosphanoxiden" ZEITSCHRIFT FUR NATURFORSCHUNG, TEIL B: ANORGANISCHE CHEMIE, ORGANISCHE CHEMIE., Bd. 36b, 1981, Seiten 297-300, XP008025993 VERLAG DER ZEITSCHRIFT FUR NATURFORSCHUNG. TUBINGEN., DE ISSN: 0932-0776 in der Anmeldung erwähnt
- BRIERLEY J. ET AL.: "The relative apicophilicities of pseudohalogen substituents in five-coordinate phosphoranes" PHOSPHORUS AND SULFUR , Bd. 7, 1979, Seiten 167-169, XP008025989 GORDON AND BREACH SCIENCE PUBLISHERS- GB ISSN: 0308-664X in der Anmeldung erwähnt
- TANI K. ET AL.: "Acylthio- and thioacyl- thiophosphines ((RCES)nPPh3-n, E=O, S; n=1-3): Synthesis and structural analysis" BULLETIN OF THE CHEMICAL SOCIETY OF JAPAN., Bd. 73, Nr. 5, - Mai 2000 (2000-05) Seiten 1243-1252, XP002266091 JAPAN PUBLICATIONS TRADING CO. TOKYO., JP ISSN: 0009-2673
- SINITSA A.D. ET AL.: "Phosphorylation of N-substituted carboxamides with phosphorochloridites" JOURNAL OF GENERAL CHEMISTRY USSR., Bd. 56, Nr. 6, - 20. November 1986 (1986-11-20) Seiten 1113-1118, XP002266092 CONSULTANTS BUREAU. NEW YORK., US
- BURGADA R.: "Mécanisme d'acidolyse de la liaison PIII N et d'aminolyse de la liaison PIII OC(O)" BULLETIN DE LA SOCIETE CHIMIQUE DE FRANCE. 1 PARTIE - CHIMIE ANALYTIQUE, MINERALE ET PHYSIQUE., Nr. 11, 1972 - November 1972 (1972-11), Seiten 4161-4163, XP002266093 SOCIETE FRANCAISE DE CHIMIE. PARIS., FR
- PATENT ABSTRACTS OF JAPAN vol. 1998, no. 10, 31. August 1998 (1998-08-31) & JP 10 120691 A (SUMITOMO CHEM CO LTD), 12. Mai 1998 (1998-05-12)
- NECAS M. ET AL.: "The first six membered genuine heterocycle: (Ph3PCu(Ph2P(S)-N-C(O)Ph))" PHOSPHORUS, SULFUR AND SILICON AND THE RELATED ELEMENTS, Bd. 169, 2001, Seiten 55-58, XP008026049 GORDON AND BREACH SCIENCE PUBLISHERS, AMSTERDAM, GB ISSN: 1042-6507

## Beschreibung

Die vorliegende Erfindung betrifft ein neues Verfahren zur Herstellung von Acylphosphinoxiden. Diese Substanzklasse findet beispielsweise als Photoinitiator beziehungsweise Ausgangssubstanz für deren Synthese in strahlungshärtbaren Lacksystemen Anwendung.

Monoacylphosphinoxide sind als Photoinitiatoren bekannt z.B. aus der EP-A 7508. Bisacylphosphinoxide und ihre Verwendung als Photoinitiatoren sind beispielsweise bekannt aus der EP-A 184 085.

Bekannt ist die Synthese von Acylphosphinoxiden in einer Arbusov-Umlagerung durch Umsetzung von Alkoxyphosphinen und Säurechloriden aus der EP-B 7 508: 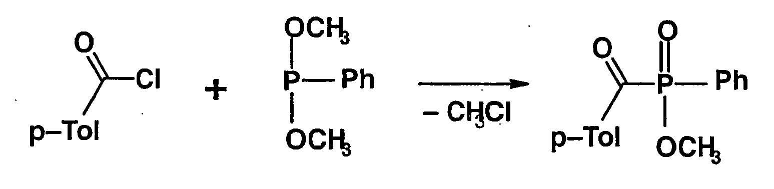 Darin bedeuten p-Tol = 4-Methylphenyl und Ph = Phenyl.

Bei diesem Verfahren zur Herstellung von Acylphosphinoxiden durch Umsetzung von Carbonsäurechloriden mit Alkoxyphosphinen treten als unerwünschte Nebenkomponenten in stöchiometrischen Mengen Alkylchloride auf, die einen entsprechenden Entsorgungsaufwand erforderlich machen. Das Carbonsäurechlorid wird aufwendig durch Umsetzung mit Chlorierungsmitteln wie Thionylchlorid aus der korrespondierenden Carbonsäure erhalten. Das Alkoxyphosphin ist unter stöchiometrischem Einsatz einer Hilfsbase aus dem entsprechenden Halogenphosphin zugänglich. In der Regel ist noch eine Abtrennung der neutralisierten Hilfsbase notwendig.

Aus US 5 472 992 ist die Synthese von Bisacylphosphinen bekannt, in der ein Phosphin in Gegenwart einer Base diacyliert und anschließend oxidiert wird.

Nachteilig an diesen Synthesemethoden ist jedoch, daß flüchtige, giftige und übelriechende Phosphine verwendet werden müssen.

Aus der WO 00/32612 ist weiterhin die Synthese von Acyl- und Bisacylphosphinen bekannt, in der ein organisches Phosphoryihalogenid mit einem Alkalimetall oder Magnesium/Lithium in Kontakt gebracht wird und die dabei entstehenden metallierten Phosphine dann mit einem Säurechlorid umgesetzt werden: 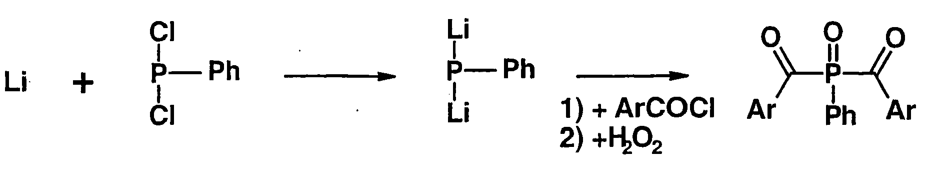 Darin bedeuten Ph = Phenyl und Ar = Aryl.

Hierbei werden die Chlorphosphine z.B. durch Umsetzung mit metallischem Natrium oder Lithium zunächst metalliert und anschließend mit dem Carbonsäurechlorid umgesetzt. Anschließend muß das Acylphosphan noch zum Acylphosphinoxid oxidiert werden.

Ein einfacherer Zugang zu der Substanzklasse der Acylphosphinoxide wäre wünschenswert. Hierbei sollten keine Alkylhalogenide als Koppelprodukte, die eine aufwendige Entsorgung nach sich ziehen, anfallen. Es wäre zudem wünschenswert, direkt Carbonsäuren in die Synthese einzusetzen, ohne erst die korrosiven Säurechloride über einen zusätzlichen Verfahrensschritt herstellen zu müssen. Weiterhin wäre es hilfreich, direkt die Chlorphosphine in die Synthese einzusetzen, ohne zunächst die für die Arbusov-Reaktion notwendigen Alkoxyphosphine bzw. metallierten Phosphide aus den Chlorphosphinen herstellen zu müssen.

Die Bildung von Carboxyphosphinen durch Umsetzung der Natriumsalze der Carbonsäuren mit Chlorphosphinen wird in Chemiker-Zeitung, Jahrgang 107, Nr. 4, 1983, Seiten 121-126 (H. Bollmacher, P. Sartori, "Über Di- und Tricarboxyphosphine") beschrieben.

Alternativ zu dieser Umsetzung mit Natriumsalzen der Carbonsäure kann auch die freie Säure in Gegenwart stöchiometrischer Mengen einer Hilfsbase mit den Chlorphosphinen umgesetzt werden: Chemiker-Zeitung, Jahrgang 106, Nr. 11, 1982, Seiten 391-395 (H. Bollmacher, P. Sartori, "Über Diphenylcarboxyphosphine"). Bollmacher und Sartori berichten ferner über die Reaktivität von Carboxydiphenylphosphinen gegenüber Aminen, beispielsweise Diethylamin oder Pyridin, wonach Carboxydiphenylphosphine zu Diphenylphosphinigsäure-diethylamid reagieren beziehungsweise in ihre Anhydride zerfallen.

J. Brierley, J.I. Dickstein und S. Trippett berichten in Phosphorus and Sulfur, Bd. 7, 1979, Seiten 167-169 über erfolglose Versuche, Phosphorane mit 2,4,6-Trimethylbenzoyloxy-Gruppen herzustellen (Seite 168, linke Spalte) und beschreiben die Herstellung von 2,4,6-Trimethylbenzoyloxydiphenylphosphin.

Aus E. Lindner, J.C. Wuhrmann, Z. Naturforsch. 36b, 1981, Seiten 297-300 ist bekannt, daß sich Perfluoracyloxydiphenylphosphane bei Raumtemperatur in die entsprechenden Perfluoracyldiphenylphosphinoxide umlagern, während Aroyloxydiphenylphosphine dies nicht tun und sowohl thermisch als auch gegen Nucleophile stabil sind.

Lediglich bei Perfluoracyloxydiphenylphosphanen konnte eine Umlagerung zu Acylphosphinoxiden beobachtet werden.

P. Sartori, R.H. Hochleitner und G. Hägele beschreiben in Z. Naturforsch. 31b, 1976, Seiten 76 - 80 dagegen die Umsetzung von Diphenylchlorphosphin mit Trifluoressigsäure zu Diphenylphosphinsäure-1-diphenylphosphoryl-2,2,2-trifluorethylester bei Temperaturen bis zu 170°C:

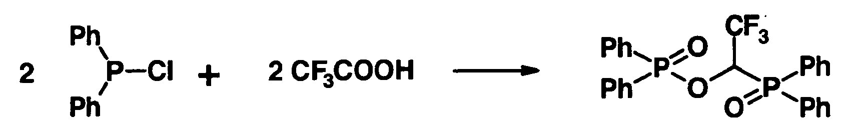

V.A. Al'fonsov et al. beschreiben in Journal of General Chemistry USSR, Bd. 58, Nr. 8, S. 1548 - 1553 die Möglichkeit zur Herstellung von S-Acetyl Phosphorothioiten durch eine Umlagerungsreaktion in niedrigen Ausbeuten.

G. W. Sluggett et al. untesuchen in J. Am. Chem. Soc. 1995, 117, 5148 - 5153 das photochemische Verhalten von (2,4,6-Trimethylbenzoyl)diphenylphosphinoxid.

US 2659747 beschreibt die Herstellung gemischter Anhydride aus Phosphoriger Säure und Carbonsäuren bei niedrigen Temperaturen.

K. Tani et al. beschreiben in Bull. Chem. Soc. Jpn., 2000, 73, S. 1243 - 1252 die Herstellung von Acylthiophosphinen.

A. D. Sinitsa et al. beschreiben in Journal of General Chemistry USSR, Bd. 56, Nr. 6, S. 1113 - 1118 die Herstellung von Phosphoamiditen aus Chloriden der Phosphorigen Säure und Säureamiden.

R. Burgata beschreibt in Bulletin de la Société Chimique de France, 1972, 11, 4161 - 4163 die Herstellung gemischter Anhydride aus Amiden der Phosphorigen Säure und Carbonsäuren.

JP 10-120691 beschreibt die Herstellung acyloxysubstituierten Estern der Phosphorigen Säure.

M. Necas et al. beschreiben in "Phosphurous, Sulfur and Silicon and the Related Elements", Bd. 169, 2001, S. 55 - 58, Gordon and Breach Science Publishers, Amsterdam, die Herstellung von Phosphoamiditen.

Nachteilig an allen diesen genannten Schriften ist, daß sie keine Hinweise auf die Herstellung von Acylphosphinoxiden aus Carboxyphosphinen geben.

Aufgabe der vorliegenden Erfindung war es, einen neuen Syntheseweg für aromatische Phosphinoxide zu entwickeln, bei dem keine stöchiometrischen Mengen Alkylchloride freigesetzt werden, keine aufwendigen Metallierungen durchgeführt werden müssen und von freien Carbonsäuren oder deren Salzen ausgegangen werden kann.

Die Aufgabe wurde gelöst durch ein Verfahren zur Herstellung von aromatischen Acylphosphinoxiden (II) in dem aromatischen Carboxyphosphinen (I) zu den Acylphosphinoxiden (II) in Abwesenheit eines Katalysators bei einer Temperatur oberhalb von 100°C oder in Anwesenheit eines Katalysators oberhalb von 80°C für eine Dauer von 5 Minuten bis 5 Stunden umgesetzt werden, 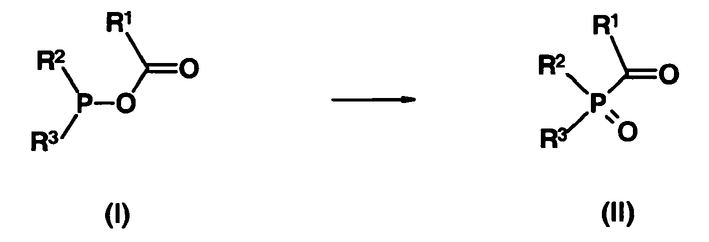 worin
- R¹: C₆ - C₁₂-Aryl oder einen fünf- bis sechsgliedrigen, Sauerstoff-, Stickstoff- und/oder Schwefelatome aufweisenden aromatischen Heterocyclus, wobei die genannten Reste jeweils durch Aryl, Alkyl, Aryloxy, Alkyloxy, Heteroatome und/oder Heterocyclen substituiert sein können, und
- R² und R³: unabhängig voneinander C₁ - C₁₈-Alkyl, C₁ - C₁₈-Alkoxy, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₂ - C₁₈-Alkenyl, C₅ - C₁₂-Cycloalkyl, C₆ - C₁₂-Aryl, C₁ - C₁₈-Alkyloyl, C₆ - C₁₂-Aryloyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können, ferner ein Metall, eine Gruppe -O⁻Kation⁺ oder Halogen,
bedeuten.

Darin bedeuten
gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl, 1- (p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl,
gegebenenfalls durch Aryl, Alkyl, Aryloxy, Alkyloxy, Heteroatome und/oder Heterocyclen substituiertes C₁ - C₁₈-Alkoxy beispielsweise Methoxy, Ethoxy, n-Propyloxy, iso-Propyloxy, n-Butyloxy, iso-Butyloxy, sek.-Butyloxy, tert.-Butyloxy, 6-Hydroxy-1,4-dioxohexyl, 9-Hydroxy-1,4,7-trioxononyl, 12-Hydroxy-1,4,7,10-tetraoxododecyl, 6-Methoxy-1,4-dioxohexyl, 9-Methoxy-1,4,7-trioxononyl, 12-Methoxy-1,4,7,10-tetraoxododecyl, 6-Ethoxy-1,4-dioxohexyl, 9-Ethoxy-1,4,7-trioxononyl, 12-Ethoxy-1,4,7,10-tetraoxododecyl, 8-Hydroxy-1,5-dioxooctyl, 12-Hydroxy-1,5,9-trioxooctyl, 16-Hydroxy-1,5,9,13-tetraoxohexadecyl, 8-Methoxy-1,5-dioxooctyl, 12-Methoxy-1,5,9-trioxooctyl, 16-Methoxy-1,5,9,13-tetraoxohexadecyl, 8-Ethoxy-1,5-dioxooctyl, 12-Ethoxy-1,5,9-trioxooctyl, 16-Ethoxy-1,5,9,13-tetraoxohexadecyl, 10-Hydroxy-1,6-dioxodecyl, 15-Hydroxy-1,6,11-trioxopentadecyl, 10-Methoxy-1,6-dioxodecyl, 15-Methoxy-1,6,11-trioxopentadecyl, 10-Ethoxy-1,6-dioxodecyl oder 15-Ethoxy-1,6,11-trioxopentadecyl,
gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxaundecyl, 7-Methoxy-4-oxa-heptyl, 11-Methoxy-4,8-dioxa-undecyl 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3.

Weiterhin befinden sich zwischen zwei Heteroatomen in der Regel mindestens ein Kohlenstoffatom, bevorzugt mindestens zwei.

Substituierte und unsubstituierte Iminogruppen können beispielsweise Imino-, Methylimino-, iso-Propylimino, n-Butylimino oder tert-Butylimino sein.

Weiterhin bedeutet
gegebenenfalls durch Aryl, Alkyl, Aryloxy, Alkyloxy, Heteroatome und/oder Heterocyclen substituiertes C₂ - C₁₈-Alkenyl beispielsweise Vinyl, 1-Propenyl, Allyl, Methallyl, 1,1-Dimethylallyl, 2-Butenyl, 2-Hexenyl, Octenyl, Undecenyl, Dodecenyl, Octadecenyl, 2-Phenylvinyl, 2-Methoxyvinyl, 2-Ethoxyvinyl, 2-Methoxyallyl, 3-Methoxyallyl, 2-Ethoxyallyl, 3-Ethoxyallyl oder 1- oder 2-Chlorvinyl,
gegebenenfalls durch Aryl, Alkyl, Aryloxy, Alkyloxy, Heteroatome und/oder Heterocyclen substituiertes C₆ - C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,
gegebenenfalls durch Aryl, Alkyl, Aryloxy, Alkyloxy, Heteroatome und/oder Heterocyclen substituiertes C₅ - C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,
ein fünf- bis sechsgliedriger, Sauerstoff-, Stickstoff- und/oder Schwefelatome aufweisender Heterocyclus beispielsweise Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl,
ein gegebenenfalls durch Aryl, Alkyl, Aryloxy, Alkyloxy, Heteroatome und/oder Heterocyclen substituiertes C₁ - C₁₈-Alkyloyl Acetyl, Propionyl, n-Butyryl, iso-Butyryl, sek-Butyryl, tert-Butyryl, Stearyl, Trifluoracetyl, Chloracetyl, Dichloracetyl, Trichloracetyl, Pentafluorpropionyl oder Phenylacetyl,
ein gegebenenfalls durch Aryl, Alkyl, Aryloxy, Alkyloxy, Heteroatome und/oder Heterocyclen substituiertes C₆ - C₁₂-Aryloyl Benzoyl, 2-, 3- oder 4-(C₁-C₄-Alkyl)benzoyl, 2-, 3- oder 4-Chlorbenzoyl, 2-, 3- oder 4-(C₁-C₄-Alkyloxy)benzoyl, 2,3-, 2,4-, 2,5- oder 2,6-Di(C₁-C₄-Alkyl)benzoyl, 2,3-, 2,4-, 2,5- oder 2,6-Dichlorbenzoyl, 2,3-, 2,4-, 2,5- oder 2,6-Di(C₁-C₄-Alkyloxy)benzoyl, 2,3,4-, 2,3,5-, 2,3,6-, 2,4,5- oder 2,4,6- Tri(C₁-C₄-Alkyl)benzoyl, 2,3,4-, 2,3,5-, 2,3,6-, 2,4,5- oder 2,4,6- Trichlorbenzoyl oder 2,3,4-, 2,3,5-, 2,3,6-, 2,4,5- oder 2,4,6- Tri(C₁-C₄-Alkyloxy)benzoyl,
ein Metall beispielsweise ein Äquivalent eines Metalls ausgewählt aus der Gruppe Li, Na, K, Cs, Be, Mg, Ca, Ba, Ti, Zr, Cr, Mo, Fe, Co, Ni, Cu, Zn, Al oder Sn und

Halogen beispielsweise F, Cl, Br oder I.

Ferner steht in einer Gruppe -O⁻Kation⁺ der Begriff Kation⁺ für ein Äquivalent eines Kations der oben aufgeführten Metalle oder eines Ammoniumions, wie sie beispielsweise in der EP-A1 62 839, S. 3, Z. 26 bis S. 4, Z 3 mit den dort definierten Bedeutungen für die Reste R⁵ bis R⁹ aufgeführt sind.

Die Anzahl der Substituenten in den angegebenen Resten ist nicht beschränkt. In der Regel beträgt sie bei Resten mit ein bis drei Kohlenstoffatomen bis zu 3 Substituenten, bevorzugt bis zu 2 und besonders bevorzugt bis zu einem. Bei Resten mit vier bis sechs Kohlenstoffatomen beträgt sie in der Regel bis zu 4 Substituenten, bevorzugt bis zu 3 und besonders bevorzugt bis zu einem. Bei Resten mit mehr als sieben Kohlenstoffatomen beträgt sie in der Regel bis zu 6 Substituenten, bevorzugt bis zu 4 und besonders bevorzugt bis zu zwei.

C₁-C₄-Alkylbedeutet im Rahmen dieser Schrift Methyl, Ethyl, n-Propyl, iso-Propyl, n-Butyl, iso-Butyl, sek-Butyl oder tert.-Butyl, wenn nicht anders erwähnt bevorzugt Methyl oder Ethyl und besonders bevorzugt Methyl.

R¹ ist bevorzugt Phenyl, Tolyl, Xylyl, α-Naphthyl, β-Naphthyl, 2-, 3- oder 4-Chlorphenyl, 2,6- oder 2,4-Dichlorphenyl, 2,4,6-Trichlorphenyl, 2-, 3- oder 4-Methylphenyl, 2,6- oder 2,4-Dimethylphenyl, 2,4,6-Trimethylphenyl, 2-, 3- oder 4-Ethylphenyl, 2,6- oder 2,4-Diethylphenyl, 2-, 3- oder 4-iso-Propylphenyl, 2-, 3- oder 4-tert.-Butylphenyl, 2-, 3- oder 4-Methoxyphenyl, 2,6- oder 2,4-Dimethoxyphenyl, 2,6- oder 2,4-Diethoxyphenyl, Methylnaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, 2- oder 3-Furyl, 2- oder 3-Thiophenyl, 2- oder 3-Pyrryl oder Dimethylpyrryl.

R¹ ist besonders bevorzugt Phenyl; Tolyl, α-Naphthyl, β-Naphthyl, 2,6- oder 2,4-Dichlorphenyl, 2,4,6-Trichlorphenyl, 2,6- oder 2,4-Dimethylphenyl, 2,4,6-Trimethylphenyl, 2,6- oder 2,4-Diethylphenyl, 2-iso-Propylphenyl, 2-tert.-Butylphenyl, 2,6- oder 2,4-Dimethoxyphenyl, 2,6- oder 2,4-Diethoxyphenyl, Methylnaphthyl, 2,4,6-Trimethoxyphenyl, 2,6-Dimethoxyphenyl, 2,6-Dichlorphenyl, 2,6-Dinitrophenyl oder ortho-substituierte Phenyle, wie 2-Methylphenyl, 2-Methoxyphenyl oder 2-Chlorphenyl.

R¹ ist ganz besonders bevorzugt Phenyl, 2-Methylphenyl, 2-Methoxyphenyl, 2-Chlorphenyl, α-Naphthyl, 2,6-Dichlorphenyl, 2,4,6-Trichlorphenyl, 2,6-Dimethylphenyl, 2,4,6-Trimethylphenyl, 2,6-Diethylphenyl, 2,6-Dimethoxyphenyl, 2,6-Diethoxyphenyl, 2,6-Dimethoxyphenyl, 2,4,6-Trimethoxyphenyl, 2,6-Dimethoxyphenyl, 2,6-Dichlorphenyl oder 2,6-Dinitrophenyl.

R¹ ist insbesondere 2,6-Dichlorphenyl, 2,4,6-Trichlorphenyl, 2,6-Dimethylphenyl, 2,4,6-Trimethylphenyl, 2,4,6-Trimethoxyphenyl oder 2,6-Dimethoxyphenyl und speziell 2,4,6-Trimethylphenyl.

R² und R³ sind unabhängig voneinander bevorzugt 2,4,4-Trimethylpentyl, Benzyl, p-Chlorbenzyl, 2,4-Dichlorbenzyl, p-Methoxybenzyl, Methoxy, Ethoxy, n-Propyloxy, iso-Propyloxy, n-Butyloxy, iso-Butyloxy, sek.-Butyloxy, tert.-Butyloxy, 6-Hydroxy-1,4-dioxohexyl, 9-Hydroxy-1,4,7-trioxononyl, 12-Hydroxy-1,4,7,10-tetraoxododecyl, 6-Methoxy-1,4-dioxohexyl, 9-Methoxy-1,4,7-trioxononyl, 12-Methoxy-1,4,7,10-tetraoxododecyl, 6-Ethoxy-1,4-dioxohexyl, 9-Ethoxy-1,4,7-trioxononyl, 12-Ethoxy-1,4,7,10-tetraoxododecyl, 8-Hydroxy-1,5-dioxooctyl, 12-Hydroxy-1,5,9-trioxooctyl, 16-Hydroxy-1,5,9,13-tetraoxohexadecyl, 10-Hydroxy-1,6-dioxodecyl, 15-Hydroxy-1,6,11-trioxopentadecyl, Vinyl, 1-Propenyl, Allyl, Methallyl, 1,1-Dimethylallyl, 2-Butenyl, 2-Hexenyl, 2-Phenylvinyl, 2-Methoxyvinyl, 2-Ethoxyvinyl, 2-Chlorvinyl, Phenyl, Tolyl, xylyl, α-Naphthyl, β-Naphthyl, 4-Diphenylyl, 2-, 3- oder 4-Chlorphenyl, 2,4- oder 2,6-Dichlorphenyl, 2,4,6-Trichlorphenyl, 2-, 3- oder 4-Methylphenyl, 2,4- oder 2,6-Dimethylphenyl, 2,4,6-Trimethylphenyl, 2-, 3- oder 4-Ethylphenyl, 2,4- oder 2,6-Diethylphenyl, 2-, 3- oder 4-iso-Propylphenyl, 2-, 3- oder 4-tert.-Butylphenyl, 2-, 3- oder 4-Methoxyphenyl, 2,4- oder 2,6-Dimethoxyphenyl, 2-, 3- oder 4-Ethoxyphenyl, Methylnaphthyl, Chlornaphthyl, Ethoxynaphthyl, 2,6-Dimethylphenyl, 2,4,6-Trimethylphenyl, 2,4- oder 2,6-Dimethoxyphenyl, 2,4- oder 2,6-Dichlorphenyl, 2- oder 4-Nitrophenyl, 2,4- oder 2,6-Dinitrophenyl, 4-Dimethylaminophenyl, 4-Acetylphenyl, 2,4,6-Trimethylbenzoyl, 2,6-Dimethoxybenzoyl oder 2,6-Dichlorbenzoyl.

R² und R³ sind unabhängig voneinander besonders bevorzugt Benzyl, p-Chlorbenzyl, 2,4-Dichlorbenzyl, p-Methoxybenzyl, Methoxy, Ethoxy, n-Propyloxy, iso-Propyloxy, n-Butyloxy, iso-Butyloxy, sek.-Butyloxy, tert.-Butyloxy, 6-Hydroxy-1,4-dioxohexyl, 9-Hydroxy-1,4,7-trioxononyl, 12-Hydroxy-1,4,7,10-tetraoxododecyl, 6-Methoxy-1,4-dioxohexyl, 9-Methoxy-1,4,7-trioxononyl, 12-Methoxy-1,4,7,10-tetraoxododecyl, 6-Ethoxy-1,4-dioxohexyl, 9-Ethoxy-1,4,7-trioxononyl, 12-Ethoxy-1,4,7,10-tetraoxododecyl, 8-Hydroxy-1,5-dioxooctyl, 12-Hydroxy-1,5,9-trioxooctyl, 16-Hydroxy-1,5,9,13-tetraoxohexadecyl, 10-Hydroxy-1,6-dioxodecyl, 15-Hydroxy-1,6,11-trioxopentadecyl, Vinyl, 2-Butenyl, 2-Phenylvinyl, Phenyl, Tolyl, Xylyl, α-Naphthyl, β-Naphthyl, 4-Diphenylyl, 2-, 3- oder 4-Chlorphenyl, 2,4- oder 2,6-Dichlorphenyl, 2,4,6-Trichlorphenyl, 2-, 3- oder 4-Methylphenyl, 2,4- oder 2,6-Dimethylphenyl, 2,4,6-Trimethylphenyl, 2-, 3- oder 4-Ethylphenyl, 2-, 3- oder 4-iso-Propylphenyl, 2-, 3- oder 4-tert.-Butylphenyl, 2-, 3- oder 4-Methoxyphenyl, 2,4- oder 2,6-Dimethoxyphenyl, 2-, 3- oder 4-Ethoxyphenyl, Methylnaphthyl, Chlornaphthyl, Ethoxynaphthyl, 2- oder 4-Nitrophenyl, 2,4- oder 2,6-Dinitrophenyl, 4-Dimethylaminophenyl, 4-Acetylphenyl, 2,4,6-Trimethylbenzoyl, 2,6-Dimethoxybenzoyl oder 2,6-Dichlorbenzoyl.

R² und R³ sind unabhängig voneinander ganz besonders bevorzugt Methoxy, Ethoxy, n-Propoxy, iso-Propoxy, n-Butyloxy, sek-Butyloxy, iso-Butyloxy, tert-Butyloxy, Phenyl, Xylyl, α-Naphthyl, β-Naphthyl, 4-Diphenylyl, 2-, 3- oder 4-Chlorphenyl, 2,4-Dichlorphenyl, 2-, 3- oder 4-Methylphenyl, 2,4-Dimethylphenyl, 2-, 3- oder 4-Ethylphenyl, 2-, 3- oder 4-Methoxyphenyl, 2,4-Dimethoxyphenyl, 2-, 3- oder 4-Ethoxyphenyl, Methylnaphthyl, Chlornaphthyl, Ethoxynaphthyl, 2- oder 4-Nitrophenyl, 2,4,6-Trimethylbenzoyl, 2,6-Dimethoxybenzoyl oder 2,6-Dichlorbenzoyl.

R² und R³ sind unabhängig voneinander insbesondere Methoxy, Ethoxy, n-Propoxy, iso-Propoxy, n-Butyloxy, sek-Butyloxy, iso-Butyloxy, tert-Butyloxy, Phenyl, 4-Diphenylyl, 2-, 3- oder 4-Chlorphenyl, 2-, 3- oder 4-Methylphenyl, 2-, 3- oder 4-Methoxyphenyl, 2-, 3- oder 4-Ethoxyphenyl, 2,4,6-Trimethylbenzoyl, 2,6-Dimethoxybenzoyl oder 2,6-Dichlorbenzoyl.

R² und R³ sind unabhängig voneinander speziell Phenyl oder 4-Methylphenyl.

Ein weiterer Gegenstand dieser Erfindung sind aromatische Carboxyphosphine (Ia), worin die in Formel (I) genannten Reste R¹, R² und R³ folgende Bedeutungen haben:

R¹ ist bevorzugt Phenyl, Tolyl, Xylyl, α-Naphthyl, β-Naphthyl, 2-3- oder 4-Chlorphenyl, 2,6- oder 2,4-Dichlorphenyl, 2,4,6-Trichlorphenyl, 2-, 3- oder 4-Methylphenyl, 2,6- oder 2,4-Dimethylphenyl, 2,4,6-Trimethylphenyl, 2-, 3- oder 4-Ethylphenyl, 2,6- oder 2,4-Diethylphenyl, 2-, 3- oder 4-iso-Propylphenyl, 2-, 3- oder 4-tert.-Butylphenyl, 2-, 3- oder 4-Methoxyphenyl, 2,6- oder 2,4-Dimethoxyphenyl, 2, 6- oder 2,4-Diethoxyphenyl, Methylnaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, 2- oder 3-Furyl, 2- oder 3-Thiophenyl, 2- oder 3-Pyrryl oder Dimethylpyrryl.

R¹ ist besonders bevorzugt Phenyl, Tolyl, α-Naphthyl, β-Naphthyl, 2,6- oder 2,4-Dichlorphenyl, 2,4,6-Trichlorphenyl, 2,6- oder 2,4-Dimethylphenyl, 2,4,6-Trimethylphenyl, 2,6- oder 2,4-Diethylphenyl, 2-iso-Propylphenyl, 2-tert.-Butylphenyl, 2,6- oder 2,4-Dimethoxyphenyl, 2,6- oder 2,4-Diethoxyphenyl, Methylnaphthyl, 2,6-Dimethylphenyl, 2,4,6-Trimethylphenyl, 2,6-Dimethoxyphenyl, 2,6-Dichlorphenyl, 2,6-Dinitrophenyl oder ortho-substituierte Phenyle, wie 2-Methylphenyl, 2-Methoxyphenyl oder 2-Chlorphenyl.

R¹ ist ganz besonders bevorzugt Phenyl, 2-Methylphenyl, 2-Methoxyphenyl, 2-Chlorphenyl, α-Naphthyl, 2,6-Dichlorphenyl, 2,4,6-Trichlorphenyl, 2,6-Dimethylphenyl, 2,4,6-Trimethylphenyl, 2,6-Diethylphenyl, 2,6-Dimethoxyphenyl, 2,6- Diethoxyphenyl, 2,6-Dimethylphenyl, 2,4,6-Trimethylphenyl, 2,6-Dimethoxyphenyl, 2,6-Dichlorphenyl oder 2,6-Dinitrophenyl.

R¹ ist insbesondere Phenyl, 2,6-Dichlorphenyl, 2,4,6-Trichlorphenyl, 2,6-Dimethylphenyl, 2,4,6-Trimethylphenyl oder 2,6-Dimethoxyphenyl.

R² und R³ können unabhängig voneinander die oben angeführten Bedeutungen annehmen.

R² und R³ sind unabhängig voneinander bevorzugt 2,4,4-Trimethylpentyl, Benzyl, p-Chlorbenzyl, 2,4-Dichlorbenzyl, p-Methoxybenzyl, Methoxy, Ethoxy, n-Propyloxy, iso-Propyloxy, n-Butyloxy, iso-Butyloxy, sek.-Butyloxy, tert.-Butyloxy, 6-Hydroxy-1,4-dioxohexyl, 9-Hydroxy-1,4,7-trioxononyl, 12-Hydroxy-1,4,7,10-tetraoxododecyl, 6-Methoxy-1,4-dioxohexyl, 9-Methoxy-1,4,7-trioxononyl, 12-Methoxy-1,4,7,10-tetraoxododecyl, 6-Ethoxy-1,4-dioxohexyl, 9-Ethoxy-1,4,7-trioxononyl, 12-Ethoxy-1,4,7,10-tetraoxododecyl, 8-Hydroxy-1,5-dioxooctyl, 12-Hydroxy-1,5,9-trioxooctyl, 16-Hydroxy-1,5,9,13-tetraoxohexadecyl, 10-Hydroxy-1,6-dioxodecyl, 15-Hydroxy-1,6,11-trioxopentadecyl, Vinyl, 1-Propenyl, Allyl, Methallyl, 1,1-Dimethylallyl, 2-Butenyl, 2-Hexenyl, 2-Phenylvinyl, 2-Methoxyvinyl, 2-Ethoxyvinyl, 2-Chlorvinyl, Phenyl, Tolyl, Xylyl, α-Naphthyl, β-Naphthyl, 4-Diphenylyl, 2-, 3- oder 4-Chlorphenyl, 2,4- oder 2,6-Dichlorphenyl, 2,4,6-Trichlorphenyl, 2-, 3- oder 4-Methylphenyl, 2,4- oder 2,6-Dimethylphenyl, 2,4,6-Trimethylphenyl, 2-, 3- oder 4-Ethylphenyl, 2,4- oder 2,6-Diethylphenyl, 2-, 3- oder 4-iso-Propylphenyl, 2-, 3- oder 4-tert.-Butylphenyl, 2-, 3- oder 4-Methoxyphenyl, 2,4- oder 2,6-Dimethoxyphenyl, 2-, 3- oder 4-Ethoxyphenyl, Methylnaphthyl, Chlornaphthyl, Ethoxynaphthyl, 2,6-Dimethylphenyl, 2,4,6-Trimethylphenyl, 2,4- oder 2,6-Dimethoxyphenyl, 2,4- oder 2,6-Dichlorphenyl, 2- oder 4-Nitrophenyl, 2,4- oder 2,6-Dinitrophenyl, 4-Dimethylaminophenyl, 4-Acetylphenyl, 2,4,6-Trimethylbenzoyl oder Chlor.

R² und R³ sind unabhängig voneinander besonders bevorzugt Benzyl, p-Chlorbenzyl, 2,4-Dichlorbenzyl, p-Methoxybenzyl, Methoxy, Ethoxy, n-Propyloxy, iso-Propyloxy, n-Butyloxy, iso-Butyloxy, sek.-Butyloxy, tert.-Butyloxy, 6-Hydroxy-1,4-dioxohexyl, 9-Hydroxy-1,4,7-trioxononyl, 12-Hydroxy-1,4,7,10-tetraoxododecyl, 6-Methoxy-1,4-dioxohexyl, 9-Methoxy-1,4,7-trioxononyl, 12-Methoxy-1,4,7,10-tetraoxododecyl, 6-Ethoxy-1,4-dioxohexyl, 9-Ethoxy-1,4,7-trioxononyl, 12-Ethoxy-1,4,7,10-tetraoxododecyl, 8-Hydroxy-1,5-dioxooctyl, 12-Hydroxy-1,5,9-trioxooctyl, 16-Hydroxy-1,5,9,13-tetraoxohexadecyl, 10-Hydroxy-1,6-dioxodecyl, 15-Hydroxy-1,6,11-trioxopentadecyl, Vinyl, 2-Butenyl, 2-Phenylvinyl, Phenyl, Tolyl, Xylyl, α-Naphthyl, β-Naphthyl, 4-Diphenylyl, 2-, 3- oder 4-Chlorphenyl, 2,4- oder 2,6-Dichlorphenyl, 2,4,6-Trichlorphenyl, 2-, 3- oder 4-Methylphenyl, 2,4- oder 2,6-Dimethylphenyl, 2,4,6-Trimethylphenyl, 2-, 3- oder 4-Ethylphenyl, 2-, 3- oder 4-iso-Propylphenyl, 2-, 3- oder 4-tert.-Butylphenyl, 2-, 3- oder 4-Methoxyphenyl, 2,4- oder 2,6-Dimethoxyphenyl, 2-, 3- oder 4-Ethoxyphenyl, Methylnaphthyl, Chlornaphthyl, Ethoxynaphthyl, 2- oder 4-Nitrophenyl, 2,4- oder 2,6-Dinitrophenyl, 4-Dimethylaminophenyl, 4-Acetylphenyl, 2,4,6-Trimethylbenzoyl oder Chlor.

R² und R³ sind unabhängig voneinander ganz besonders bevorzugt Methoxy, Ethoxy, n-Propoxy, iso-Propoxy, n-Butyloxy, sek-Butyloxy, iso-Butyloxy, tert-Butyloxy, 6-Hydroxy-1,4-dioxohexyl, 9-Hydroxy-1,4,7-trioxononyl, 12-Hydroxy-1,4,7,10-tetraoxododecyl, 8-Hydroxy-1,5-dioxooctyl, 12-Hydroxy-1,5,9-trioxooctyl, 16-Hydroxy-1,5,9,13-tetraoxohexadecyl, 10-Hydroxy-1,6-dioxodecyl, 15-Hydroxy-1,6,11-trioxopentadecyl, Phenyl, Xylyl, α-Naphthyl, β-Naphthyl, 4-Diphenylyl, 2-, 3- oder 4-Chlorphenyl, 2,4-Dichlorphenyl, 2-, 3- oder 4-Methylphenyl, 2,4-Dimethylphenyl, 2-, 3- oder 4-Ethylphenyl, 2-, 3- oder 4-Methoxyphenyl, 2,4-Dimethoxyphenyl, 2-, 3- oder 4-Ethoxyphenyl, Methylnaphthyl, Chlornaphthyl, Ethoxynaphthyl, 2- oder 4-Nitrophenyl, 2,4,6-Trimethylbenzoyl oder Chlor.

R² und R³ sind unabhängig voneinander insbesondere Methohy, Ethoxy, n-Propoxy, iso-Propoxy, n-Butyloxy, sek-Butyloxy, iso-Butyloxy, tert-Butyloxy, Phenyl, 4-Diphenylyl, 2-, 3- oder 4-Chlorphenyl, 2-, 3- oder 4-Methylphenyl, 2-, 3- oder 4-Methoxyphenyl, 2-, 3- oder 4-Ethoxyphenyl oder 2,4,6-Trimethylbenzoyl.

R² und R³ sind unabhängig voneinander speziell Phenyl, 4-Methylphenyl oder 2,4,6-Trimethylbenzoyl.

R² und R³ können gleich oder verschieden sein, bevorzugt sind sie gleich, außer wenn einer der Reste R² und R³ 2,4,6-Trimethylbenzoyl ist, in diesem Fall ist der andere bevorzugt Phenyl.

Ganz besonders bevorzugt sind die folgenden Carboxyphosphine, in denen
R¹ ausgewählt ist unter den oben angeführten aromatischen Resten, die in mindestens einer ortho-Position zur Carbonylgruppe mit einem anderen Rest als Wasserstoff substituiert sind und R² und R³ unabhängig voneinander ausgewählt sind aus der Gruppe Methoxy, Ethoxy, n-Propyloxy, iso-Propyloxy, n-Butyloxy, iso-Butyloxy, sek.-Butyloxy, tert.-Butyloxy, Phenyl, 4-Methylphenyl, 4-Chlorphenyl, 4-Methoxyphenyl, 2,4,4-Trimethylpentyl, 2,6-Dimethoxybenzoyl und 2,4,6-Trimethylbenzoyl.

Ganz besonders sind solche der genannten Carboxyphosphine (Ia) bevorzugt, in denen
R¹ ausgewählt ist aus der Gruppe 2,4,9-Trimethylphenyl, 2,6-Dimethylphenyl, 2,6-Dichlorphenyl, 2,6-Dimethoxyphenyl, 2-Methylphenyl, 2-Chlorphenyl und 2-Methoxyphenyl und
R² und R³ unabhängig voneinander ausgewählt sind aus der Gruppe Methoxy, Ethoxy, n-Propyloxy, iso-Propylohy, n-Butyloxy, iso-Butyloxy, sek.-Butyloxy, tert.-Butyloxy, Phenyl, 4-Methylphenyl, 4-Chlorphenyl, 4-Methoxyphenyl, 2,4,4-Trimethylpentyl, 2,6-Dimethoxybenzoyl und 2,4,6-Trimethylbenzoyl.

Speziell sind solche der genannten Carboxyphosphine (Ia) bevorzugt, in denen R² und R³ gleich sind.

Diese Carboxyphosphine (Ia) stellen wertvolle Zwischenprodukte in der Synthese der entsprechenden Acylphosphine nach dem erfindungsgemäßen Verfahren dar.

Die Synthese von Carboxyphosphinen (I) ist aus dem Stand der Technik bekannt, beispielsweise aus den eingangs zitierten Literaturstellen.

Nach dem Stand der Technik wird beispielsweise das Natriumsalz der Carbonsäure in Diethylether bei niedrigen Temperaturen (0°C) mit einem Chlorphosphin umgesetzt, wobei NaCl ausfällt und das Carboxyphosphin in Lösung bleibt. Das ausgefallene NaCl wird abfiltriert. Wird das Lösemittel entfernt, bleibt das Carboxyphosphin als Öl oder Feststoff zurück.

Statt des Natriumsalzes der Carbonsäure kann auch die freie Carbonsäure in Gegenwart eines tertiären Amins umgesetzt werden, wobei lt. H. Bollmacher, P. Sartori, Chemiker-Zeitung, Jahrgang 106, Nr. 11, 1982, Seite 392 die Carboxyphosphine durch die Hilfsbase teilweise in die Anhydride zersetzt werden, was bei dieser Synthesemethode zu schlechten Ausbeuten führt. Die in der Literatur beschriebenen Herstellungsmethoden sind aufwendig, insbesondere, weil das Salz der Hilfsbase als Feststoff anfällt und weil die Reaktion bei niedrigen Temperaturen durchgeführt werden muß.

Carboxyphosphine sind erfindungsgemäß beispielsweise gemäß der folgenden Reaktionsgleichung erhältlich: 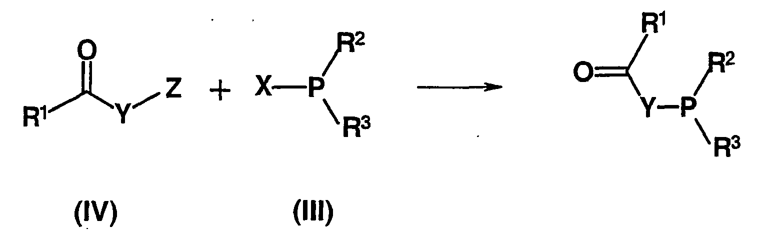 Darin haben R¹, R² und R³ die oben angeführten Bedeutungen.

Ferner bedeuten
- X: Halogen, Pseudohalogen, un-, mono- oder disubstituierter Stickstoff oder Sulfuryloxy, bevorzugt Halogen,
- Y: Sauerstoff, Schwefel, un- oder monosubstituierten Stickstoff, bevorzugt Sauerstoff und
- Z: Wasserstoff, oder ein Äquivalent eines Kations.

Darin bedeuten
- Halogen: beispielsweise F, Cl, Br oder I, bevorzugt Cl,
- Pseudohalogen: beispielsweise CN, OCN oder SCN,
un-, mono- oder disubstituierter Stickstoff -NH₂, -NHR² oder -NR²R³ beziehungsweise -NH- oder -NR²-, wobei R² und R³ die gleichen Bedeutungen haben, wie oben aufgeführt, jedoch von R² und R³ in der Verbindung (III) verschieden sein können, bevorzugt handelt es sich um ein ein-, zwei- oder dreifach mit Wasserstoff oder C₁ - C₄-Alkyl substituiertes Stickstoffatom, und

### Sulfuryloxy beispielsweise Tosylat, Brosylat, Mesylat oder Triflat.

Kationen können dabei beispielsweise protonierte Hilfsbasen (siehe unten) oder solche sein, wie in der EP-A 62 839 aufgeführt, also Äquivalente eines Kations der 1. bis 3. Hauptgruppe des Periodensystems mit einem Molgewicht unter 138, Ammoniumionen, abgeleitet von quartären Ammoniumionen oder Triethylendiammoniumionen, oder Phosphoniumionen, bevorzugt protonierte Hilfsbasen, Na⁺, K⁺, Li⁺, Cs⁺, Mg²⁺, Ca²⁺, Al³⁺, oder primäres, sekundäres, tertiäres oder quartäres mit C₁ - C₄-Alkyl substituiertes Ammonium und besonders bevorzugt protonierte Hilfsbasen.

Die Umsetzung der Komponenten (IV) und (III) miteinander kann erfindungsgemäß in Substanz oder als Dispersion oder Lösung in einem geeigneten Lösungsmittel bei einer Temperatur zwischen beispielsweise -20°C und 160°C erfolgen, bevorzugt zwischen 0 und 140°C, besonders bevorzugt zwischen 50 und 120 und insbesondere zwischen 60 und 100 °C, bevorzugt in Gegenwart einer Hilfsbase.

Die Dauer der Reaktion beträgt in der Regel von wenigen Minuten bis mehrere Stunden, bevorzugt 10 Minuten bis 10 Stunden, besonders bevorzugt 10 bis 300 Minuten, ganz besonders bevorzugt 30 bis 200 Minuten.

In einer bevorzugten Ausführungsform kann die Umsetzung der Komponenten (IV) und (III) zu Carboxyphosphinen mit der Umlagerung der entstandenen Carboxyphosphinen zu Acylphosphinoxiden gekoppelt werden, indem die Komponenten (IV) und (III) bei Temperaturen bis zu 240°C miteinander umgesetzt werden, ohne daß eventuell entstehende Zwischenprodukte isoliert werden. Die Reaktionstemperatur kann während einre solchen Umsetzung gleichbleiben oder in deren Verlauf angehoben werden.

Als Hilfsbase sind solche geeignet, die protoniert als Salz mit den anionischen Verbindungen von (IV) R¹(CO) Y⁻ oder (III) X⁻ ein Salz mit einem Schmelzpunkt unterhalb von 160°C bildet, besonders bevorzugt unterhalb von 100°C und ganz besonders bevorzugt unterhalb von 80°C bilden.

Bevorzugte Hilfsbasen sind solche, wie sie in der deutschen Patentanmeldung vom 24.01.2002 mit dem Aktenzeichen 10202838.9 aufgeführt sind, dort besonders die im Einreichetext auf S. 6, Z. 37 bis S. 14, Z. 42 aufgeführten.

Besonders bevorzugt sind 3-Chlorpyridin, 4-Dimethylaminopyridin, 2-Ethyl-4-aminopyridin, 2-Methylpyridin (α-Picolin), 3-Methylpyridin (β-Picolin), 4-Methylpyridin (γ-Picolin), 2-Ethylpyridin, 2-Ethyl-6-methylpyridin, Chinolin, Isochinolin, Pyridin, 1-C₁-C₄-Alkylimidazol, 1-Methylimidazol, 1,2-Dimethylimidazol, 1-n-Butylimidazol, 1,4,5-Trimethylimidazol, 1,4-Dimethylimidazol, Imidazol, 2-Methylimidazol, 1-Butyl-2-methylimidazol, 4-Methylimidazol, 1-n-Pentylimidazol, 1-n-Hexylimidazol, 1-n-Octylimidazol, 1-(2'-Aminoethyl)-imidazol, 2-Ethyl-4-methylimidazol, 1-Vinylimidazol, 2-Ethylimidazol, 1-(2'-Cyanoethyl)-imidazol und Benzotriazol.

Ganz besonders bevorzugt sind 1-n-Butylimidazol, 1-Methylimidazol, 2-Methylpyridin und 2-Ethylpyridin, insbesondere bevorzugt ist 1-Methylimidazol.

Als Lösungsmittel können beispielsweise Benzol, Toluol, o-, m- oder p-Xylol, Cyclohexan, Cyclopentan, Pentan, Hexan, Heptan, Oktan, Petrolether, Aceton, Isobutylmethylketon, Diethylketon, Diethylether, tert.-Butylmethylether, tert.-Butylethylether, Tetrahydrofuran, Dioxan, Essigester, Methylacetat, Dimethylformamid, Dimethylsulfoxid, Acetonitril oder Gemische davon verwendet werden. Bevorzugt wird ein Lösungsmittel verwendet, das mit dem oben angeführten Salz der Hilfsbase nicht mischbar ist.

Wird in der Synthese keine Hilfsbase eingesetzt, die ein flüssiges Salz bildet, so wird das Carboxyphosphin (I) wie im Stand der Technik beschrieben aus dem Reaktionsgemisch entfernt, beispielsweise durch Filtration, Kristallisation, Extraktion, Destillation oder Rektifikation.

Wenn dagegen in der Reaktion ein flüssiges Salz bebildet worden ist, wird dieses bevorzugt mittels einer flüssig-flüssig-Phasentrennung bei einer Temperatur oberhalb des Schmelzpunktes des flüssigen Salzes, bevorzugt 5 bis 30 °C oberhalb des Schmelzpunktes, abgetrennt, beispielsweise in einem Phasenscheider oder eine Mixer-Settler-Apparatur.

Überraschend wurde gefunden, daß der aus der Literatur bekannte Zerfall des Produktes in die Anhydride in erfindungsgemäßer Gegenwart einer Hilfsbase nicht beobachtet wird.

Das Carboxyphosphin kann anschließend, falls gewünscht, noch wieter gereinigt werden, beispielsweise durch Waschen oder Umkristallisation. In der Regel sind Reinheiten von 80 Gew% oder mehr, bevorzugt 90 % oder mehr, besonders bevorzugt 95 % oder mehr und ganz besonders bevorzugt 98 Gew% oder mehr ausreichend.

Das beschriebene Verfahren ist vorteilhaft zur Herstellung von Carboxyphosphinen der Formel (Ia) geeignet.

Das Carboxyphosphin kann anschließend erfindungsgemäß zu dem Acylphosphinoxid (II) umgesetzt werden.

Die Umlagerung zum Acylphosphinoxid (II) kann thermisch und/oder katalytisch erfolgen.

Die Umlagerung kann entweder thermisch in Substanz oder als Lösung oder Dispersion in Lösungsmitteln, beispielsweise den oben angegebenen, bevorzugt den polaren Lösungsmitteln, oberhalb von 100°C, bevorzugt oberhalb von 120°C, besonders bevorzugt oberhalb von 140°C und ganz besonders bevorzugt oberhalb von 160°C durchgeführt werden.

Wird ein ein Katalysator zugegeben, findet die Umlagerung schneller und schon bei niedrigeren Temperaturen, beispielsweise oberhalb von 80°C, bevorzugt oberhalb von 100°C und ganz besonders bevorzugt oberhalb von 120°C statt.

Die Dauer der Umsetzung kann von einigen Minuten bis mehrere Stunden betragen, beispielsweise 5 Minuten bis 5 Stunden, bevorzugt 10 Minuten bis 3 Stunden und besonders bevorzugt 15 Minuten bis 2 Stunden.

Die Bildung von Carboxyphosphin und die Umlagerung können diskontinuierlich, halbkontinuierlich oder kontinuierlich in zwei getrennten Reaktoren aber auch als Eintopfsynthese durchgeführt werden.

Die Reaktion kann vorteilhaft in Gegenwart eines unter den Reaktionsbedingungen inerten Gases durchgeführt werden, beispielsweise Stickstoff, Luft, Stickstoff - Sauerstoff - Gemische, Argon, Helium, Kohlenstoffdi- oder -monooxid, bevorzugt Stickstoff oder Argon.

Der Druck, bei dem die erfindungsgemäße Reaktion durchgeführt wird, ist nicht entscheidend, die Reaktion kann bei Unter-, Über- oder Normaldruck ausgeführt werden, bevorzugt bei Normaldruck oder Überdruck bis beispielsweise 5 bar, um unter dem Siedepunkt des gegebenenfalls verwendeten Lösungsmittels zu bleiben.

Es ist möglich die Reaktion nur bis zu einem Teilumsatz durchzuführen, beispielsweise bis zu 75 %, bevorzugt bis zu 50 %, besonders bevorzugt bis zu 30 % und ganz besonders bevorzugt bis zu 20 %, Edukt und Produkt zu trennen und das Edukt in die Reaktion zurückzuführen. Die Trennung von Edukt und Produkt kann beispielsweise wie oben beschrieben, bevorzugt durch Destillation fraktionierte Kristallisation oder durch Flüssig-Flüssig-Extraktion geschehen.

Eine Flüssig-Flüssig-Extraktion kann beispielsweise erfolgen, indem zumindest ein teil des voll- oder teilumgesetzten Reaktionsgemischs in einem Gemisch aus mindestens zwei miteinander nicht mischbaren Lösungsmitteln unterschiedlicher Polarität getrennt wird.

Verfahrenstechnisch können dafür prinzipiell alle an sich bekannten Extraktionsverfahren und -apparate eingesetzt werden, z.B. solche, die in Ullmann's Encyclopedia of Industrial Chemistry, 6th ed, 1999 Electronic Release, Kapitel: Liquid - Liquid Extraction - Apparatus, beschrieben sind. Beispielsweise können dies ein- oder mehrstufige, bevorzugt mehrstufige Extraktionen, sowie solche in Gleich- oder Gegenstromfahrweise, bevorzugt Gegenstromfahrweise, sein.

Vorzugsweise werden Siebboden-, Packungs- beziehungsweise Füllkörperkolonnen, Rührbehälter oder Mixer-Settler-Apparate, sowie Kolonnen mit rotierenden Einbauten oder pulsierte Kolonnen eingesetzt.

Lösungsmittel höherer Polarität sind beispielsweise Alkohole, wie beispielsweise Methanol, Ethanol, iso-Propanol, n-Propanol, n-Butanol, iso-Butanol, sek-Butanol, tert-Butanol, Ketone, wie beispielsweise Aceton, iso-Butylmethylketon, Diethylketon, ether, wie beispielsweise Diethylether, iso-Butylmethylether, iso-Butylethylether, Dioxan, Tetrahydrofuran, Dimethylformamid, Dimethylacetamid, Dimethylsulfoxid, Sulfolan, Ethylencarbonat, Propylencarbonat oder Tetrabutylharnstoff.

Lösungsmittel geringerer Polarität sind beispielsweise oder cycloaliphatische aliphatische Kohlenwasserstoffe, wie beispielsweise n-Pentan, n-Hexan, n-Heptan, Petrolethergemische, Leichtbenzine, Cyclohexan, Methylcyclohexan oder Cyclopentan, aromatische Kohlenwasserstoffe, wie beispielsweise Benzol, Toluol oder Xylol-Isomerengemische oder halogenierte Kohlenwasserstoffe, wie beispielsweise Tetrachlorkohlenstoff, Chloroform, Methylchloroform oder Methylenchlorid.

Das Reaktionsprodukt (Acylphosphinoxid) reichert sich in der Regel in der polareren Phase an.

Bevorzugte Lösungsmittelsystemes sind Sulfolan/Tetrabutylharnstoff, Sulfolan/Hexan und Methanol/n-Heptan.

Der Katalysator kann in substöchiometrischen, stöchiometrischen oder überstöchiometrischen Mengen eingesetzt werden, bevorzugt in Mengen von 5 bis 100 Mol% bezogen auf das Edukt, besonders bevorzugt in Mengen von 5 bis 50 und ganz besonders bevorzugt 10 bis 30 Mol%.

Als Katalysatoren sind beispielsweise geeignet
- Friedel-Crafts-Katalysatoren, wie z.B. in George A. Olah, "Friedel-Crafts and Related Reactions", Vol. I, 201 und 284-290 (1963) beschrieben.
- Lewis-saure Ionische Flüssigkeiten
- Nucleophile Katalysatoren, wie sie z.B. bei Bender in "Mechanismus of Homogeneous Catalysis from Protons to Proteins", Wiley 1971, S. 147-179 oder in Jerry March "Advanced Organic Chemistry", 3rd ed. Wiley, 1985, S. 294 f., S. 334, 347 beschriebern sind.
- Säurechloride, bevorzugt das Säurechlorid der eingesetzten Carbonsäure
- Säureanhydride, bevorzugt das Säureanhydrid der eingesetzten Carbonsäure oder Trifluoressigsäureanhydrid.
- Alkylhalogenide
- Halogene
- Arbusov-Katalysatoren, wie sie z.B. bei Alok, K. Bhattacharya und G. Thyagarajan, Chem. Rev. 1981, 81, 415-430 beschrieben sind.
- Photonen (Lichtquanten)
- Katalysatoren mit gleichzeitig lewis-sauren und lewis-basichen Eigenschaften, wie z.B. Trimethylsilylcyanid oder LiI
- Heterogene Katalysatoren mit lewis-sauren Eigenschaften
- Übergangsmetalle mit hoher Affinität zu Phosphor, wie z.B. Fe(CO)₅

Bevorzugt sind Aluminiumtrichlorid (AlCl₃), Eisen(III)chlorid (FeCl₃), Aluminiumtribromid (AlBr₃), Zinkchlorid (ZnCl₂), Trifluoressigsäureanhydrid, das Säurechlorid R¹COCl oder Säureanhydrid (R¹CO)₂O der eingesetzten Verbindung (IV), KI, NaI, LiI oder Trimethylsilylcyanid, besonders bevorzugt sind AlCl₃, Trifluoressigsäureanhydrid, R¹COCl, (R¹CO)₂O oder KI.

Überraschend wurde gefunden, daß die Umlagerung erfindungsgemäß auch mit nicht-perfluorierten Acyloxyphosphanen durchgeführt werden kann.

Ferner überraschend ist es, daß der von Bollmacher und Sartori berichtete Zerfall von Carboxyphosphinen in Gegenwart von Aminen im erfindungsgemäßen Verfahren nicht stattfindet.

Die erfindungsgemäß erhältlichen Acylphosphinoxide können beispielsweise als Photoinitiatoren in der Strahlungshärtung verwendet werden.

In dieser Schrift verwendete ppm- und Prozentangaben beziehen sich, falls nicht anders angegeben, auf Gewichtsprozente und -ppm.

### Beispiele

### Beispiel 1

### Herstellung von Trimethylbenzoyloxydiphenylphosphin (TBOP)

In einem mit Stickstoff inertisierten Glaskolben wurden 43,1 g 1-Methylimidazol, 300 ml Di-n-butylether und 82,1 g Timethylbenzoesäure zusammengegeben. Bei 80°C wurden nun unter Rühren 110,3 g Diphenylchlorphosphin innerhalb 62 min in die Reaktionsmischung getropft, wobei sich die Mischung zunächst eintrübte und sich wenig später zwei flüssige Phasen ausbildeten. Man rührte noch 3 Stunden bei 80°C nach und führte bei 80°C eine Phasentrennung durch.

Die Oberphase wurde abgekühlt, wobei 151,8 g TBOP in Form farbloser Kristalle ausfielen. Das TBOP wurde abfiltriert und bei 70°C im Vakuum getrocknet. Die Ausbeute betrug 87 %.

### Beispiel 2

### Umlagerung von Trimethylbenzoyloxydiphenylphosphin in Trimethylbenzoyldiphenylphosphinoxid (TPO)

5 g TBOP wurden in einem mit Argon inertisierten Glaskolben vorgelegt und aufgeheizt. Bei ca. 80°C schmolz das TBOP. Nach 45 min bei 220°C war die Reaktionsmischung intensiv gelb gefärbt.

Das TPO fiel als gelbes Öl an und wurde mittels IR, UV, ³¹P-NMR charakterisiert.

### Beispiel 3

5 g TBOP wurden in einem mit Argon inertisierten Glaskolben vorgelegt und auf 180°C aufgeheizt. Nach 253 min wurde eine Probe entnommen und mittels ³¹P NMR untersucht. Der Umsatz an TBOP betrug laut ³¹P-NMR 93,9 %.

### Beispiel 4

5 g TBOP und 0,26 g Trimethylbenzoylchlorid (TMBC) wurden in einem mit Argon inertisierten Glaskolben vorgelegt und auf 158°C aufgeheizt, wobei sich der Ansatz intensiv gelb verfärbt. Nach 170 min wurde eine Probe untersucht. Das TPO fiel als gelbes Öl an.

### Beispiel 5

5 g TBOP und 0,2 g AlCl₃ wurden in einem mit Argon inertisierten Glaskolben vorgelegt und auf 180°C aufgeheizt, wobei sich der Ansatz intensiv gelb verfärbt. Das TPO fiel nach 36 min als gelbes Öl an.

### Beispiel 6

5 g TBOP und 0,2 g Kaliumiodid wurden in einem mit Argon inertisierten Glaskolben vorgelegt und auf 180°C aufgeheizt, wobei sich der Ansatz intensiv gelb verfärbt. Das TPO fiel nach 39 min als gelbes Öl an.

### Beispiel 7

5 g TBOP und 0,2 g Kaliumiodid wurden mit 10 mol% Trifluoressigsäureanhydrid in Dimethylacetamid in einem mit Argon inertisierten Glaskolben vorgelegt und auf 165°C aufgeheizt, wobei sich der Ansatz intensiv gelb verfärbt. Das TPO fiel nach 15 min als gelbes Öl an.

## Patentansprüche

1. Verfahren zur Herstellung von aromatischen Acylphosphinoxiden (II), **dadurch gekennzeichnet, daß** aromatische Carboxyphosphine (I) zu den Acylphosphinoxiden (II) in Abwesenheit eines Katalysators bei einer Temperatur oberhalb von 100°C oder in Anwesenheit eines Katalysators oberhalb von 80°C für eine Dauer von 5 Minuten bis 5 Stunden umgesetzt werden, 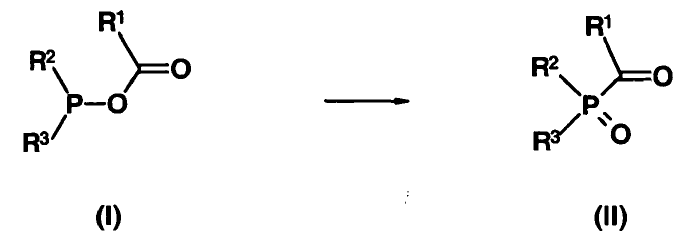 worin
R¹ C₆ - C₁₂-Aryl oder einen fünf- bis sechsgliedrigen, Sauerstoff-, Stickstoff- und/oder Schwefelatome aufweisenden aromatischen Heterocyclus, wobei die genannten Reste jeweils durch Aryl, Alkyl, Aryloxy, Alkyloxy, Heteroatome und/oder Heterocyclen substituiert sein können, und
R² und R³ unabhängig voneinander C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₂ - C₁₈-Alkenyl, C₆ - C₁₂-Aryl, C₅ - C₁₂-Cycloalkyl, C₁ - C₁₈-Alkoxy oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können, ferner ein Metall, eine Gruppe -O⁻Kation⁺ oder Halogen,
bedeuten.

2. Verfahren nach Anspruch 1, **dadurch gekennzeichnet, daß** 5 bis 100 Mol% Katalysator bezogen auf das Edukt (I) eingesetzt werden.

3. Verfahren nach Anspruch 2, **dadurch gekennzeichnet, daß** der Katalysator ausgewählt ist aus der Gruppe Friedel-Crafts-Katalysatoren, Lewis-saure Ionische Flüssigkeiten, Nucleophile Katalysatoren, Säurechloride, Säureanhydride, Alkylhalogenide, Halogene, Arbusov-Katalysatoren, Katalysatoren mit gleichzeitig lewis-sauren und lewis-basischen Eigenschaften und Übergangsmetalle mit hoher Affinität zu Phosphor.

4. Verfahren nach einem der vorstehenden Ansprüche, **dadurch gekennzeichnet, daß** R¹ ausgewählt ist aus der Gruppe umfassend Phenyl, Tolyl, Xylyl, α-Naphthyl, β-Naphthyl, 2- 3- oder 4-Chlorphenyl, 2,6- oder 2,4-Dichlorphenyl, 2,4,6-Trichlorphenyl, 2-, 3- oder 4-Methylphenyl, 2,6- oder 2,4-Dimethylphenyl, 2,4,6-Trimethylphenyl, 2-, 3- oder 4-Ethylphenyl, 2,6- oder 2,4-Diethylphenyl, 2-, 3- oder 4-iso-Propylphenyl, 2-, 3- oder 4-tert.-Butylphenyl, 2-, 3- oder 4-Methoxyphenyl, 2,6- oder 2,4-Dimethoxyphenyl, 2,6- oder 2,4-Diethoxyphenyl, Methylnaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, 2- oder 3-Furyl, 2- oder 3-Thiophenyl, 2- oder 3-Pyrryl und Dimethylpyrryl.

5. Verfahren nach einem der vorstehenden Ansprüche, **dadurch gekennzeichnet, daß** R² und R³ unabhängig voneinander ausgewählt sind aus der Gruppe umfassend 2,4,4-Trimethylpentyl, Benzyl, p-Chlorbenzyl, 2,4-Dichlorbenzyl, p-Methoxybenzyl, Methoxy, Ethoxy, n-Propyloxy, iso-Propyloxy, n-Butyloxy, iso-Butyloxy, sek.-Butyloxy, tert.-Butyloxy, 6-Hydroxy-1,4-dioxohexyl, 9-Hydroxy-1,4,7-trioxononyl, 12-Hydroxy-1,4,7,10-tetraoxododecyl, 6-Methoxy-1,4-dioxohexyl, 9-Methoxy-1,4,7-trioxononyl, 12-Methoxy-1,4,7,10-tetraoxododecyl, 6-Ethoxy-1,4-dioxohexyl, 9-Ethoxy-1,4,7-trioxononyl, 12-Ethoxy-1,4,7,10-tetraoxododecyl, 8-Hydroxy-1,5-dioxooctyl, 12-Hydroxy-1,5,9-trioxooctyl, 16-Hydroxy-1,5,9,13-tetraoxohexadecyl, 10-Hydroxy-1,6-dioxodecyl, 15-Hydroxy-1,6,11-trioxopentadecyl, Vinyl, 1-Propenyl, Allyl, Methallyl, 1,1-Dimethylallyl, 2-Butenyl, 2-Hexenyl, 2-Phenylvinyl, 2-Methoxyvinyl, 2-Ethoxyvinyl, 2-Chlorvinyl, Phenyl, Tolyl, Xylyl, α-Naphthyl, β-Naphthyl, 4-Diphenylyl, 2-, 3- oder 4-Chlorphenyl, 2,4- oder 2,6-Dichlorphenyl, 2,4,6-Trichlorphenyl, 2-, 3- oder 4-Methylphenyl, 2,4- oder 2,6-Dimethylphenyl, 2,4,6-Trimethylphenyl, 2-, 3- oder 4-Ethylphenyl, 2,4- oder 2,6-Diethylphenyl, 2-, 3- oder 4-iso-Propylphenyl, 2-, 3- oder 4-tert.-Butylphenyl, 2-, 3- oder 4-Methoxyphenyl, 2,4- oder 2,6-Dimethoxyphenyl, 2-, 3- oder 4-Ethoxyphenyl, Methylnaphthyl, Chlornaphthyl, Ethoxynaphthyl, 2,6-Dimethylphenyl, 2,4,6-Trimethylphenyl, 2,4- oder 2,6-Dimethoxyphenyl, 2,4- oder 2,6-Dichlorphenyl, 2- oder 4-Nitrophenyl, 2,4- oder 2,6-Dinitrophenyl, 4-Dimethylaminophenyl, 4-Acetylphenyl, 2,4,6-Trimethylbenzoyl, 2,6-Dimethoxybenzoyl und 2,6-Dichlorbenzoyl.

## Claims

1. A process for the preparation of aromatic acylphosphine oxides (II), which comprises converting aromatic carboxyphosphines (I) to the acylphosphine oxides (II), in the absence of a catalyst at a temperature above 100°C or in the presence of a catalyst above 80°C for a duration of from 5 minutes to 5 hours 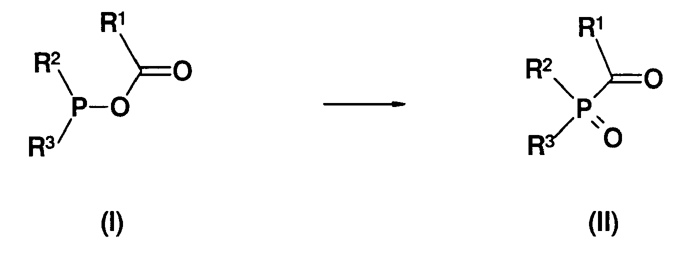 in which
R¹ is C₆-C₁₂-aryl or a five- to six-membered aromatic heterocycle having oxygen, nitrogen and/or sulfur atoms, where said radicals can in each case be substituted by aryl, alkyl, aryloxy, alkyloxy, heteroatoms and/or heterocycles, and
R² and R³ independently of one another are C₁-C₁₈-alkyl, C₂-C₁₈-alkyl optionally interrupted by one or more oxygen and/or sulfur atoms and/or one or more substituted or unsubstituted imino groups, C₂-C₁₈-alkenyl, C₆-C₁₂-aryl, C₅-C₁₂-cycloalkyl, C₁-C₁₈-alkoxy or a five- to six-membered heterocycle having oxygen, nitrogen and/or sulfur atoms, where said radicals can in each case be substituted by aryl, alkyl, aryloxy, alkyloxy, heteroatoms and/or heterocycles, also a metal, a group -O⁻cation⁺ or halogen.

2. The process according to claim 1, wherein 5 to 100 mol% catalyst, based on the starting material (I), are used.

3. The process according to claim 2, wherein the catalyst is chosen from the group consisting of Friedel-Crafts catalysts, Lewis acidic ionic liquids, nucleophilic catalysts, acid chlorides, acid anhydrides, alkyl halides, halogens, Arbusov catalysts, catalysts with simultaneous Lewis-acidic and Lewis-basic properties and transition metals with high affinity to phosphorus.

4. The process according to any of the preceding claims, wherein R¹ is chosen from the group comprising phenyl, tolyl, xylyl, α-naphthyl, β-naphthyl, 2-, 3- or 4-chlorophenyl, 2,6- or 2,4-dichlorophenyl, 2,4,6-trichlorophenyl, 2-, 3- or 4-methylphenyl, 2,6- or 2,4-dimethylphenyl, 2,4,6-trimethylphenyl, 2-, 3- or 4-ethylphenyl, 2,6- or 2,4-diethylphenyl, 2-, 3- or 4-isopropylphenyl, 2-, 3- or 4-tert-butylphenyl, 2-, 3- or 4-methoxyphenyl, 2,6- or 2,4-dimethoxyphenyl, 2,6- or 2,4-diethoxyphenyl, methylnaphthyl, 2,6-dimethylphenyl, 2,4,6-trimethylphenyl, 2,6-dimethoxyphenyl, 2,6-dichlorophenyl, 4-bromophenyl, 2- or 4-nitrophenyl, 2,4- or 2,6-dinitrophenyl, 4-dimethylaminophenyl, 4-acetylphenyl, 2- or 3-furyl, 2- or 3-thiophenyl, 2- or 3-pyrryl and dimethylpyrryl.

5. The process according to any of the preceding claims, wherein R² and R³ independently of one another are chosen from the group comprising 2,4,4-trimethylpentyl, benzyl, p-chlorobenzyl, 2,4-dichlorobenzyl, p-methoxybenzyl, methoxy, ethoxy, n-propyloxy, isopropyloxy, n-butyloxy, isobutyloxy, sec-butyloxy, tert-butyloxy, 6-hydroxy-1,4-dioxohexyl, 9-hydroxy-1,4,7-trioxononyl, 12-hydroxy-1,4,7,10-tetraoxododecyl, 6-methoxy-1,4-dioxohexyl, 9-methoxy-1,4,7-trioxononyl, 12-methoxy-1,4,7,10-tetraoxododecyl, 6-ethoxy-1,4-dioxohexyl, 9-ethoxy-1,4,7-trioxononyl, 12-ethoxy-1,4,7,10-tetraoxododecyl, 8-hydroxy-1,5-dioxooctyl, 12-hydroxy-1,5,9-trioxooctyl, 16-hydroxy-1,5,9,13-tetraoxohexadecyl, 10-hydroxy-1,6-dioxodecyl, 15-hydroxy-1,6,11-trioxopentadecyl, vinyl, 1-propenyl, allyl, methallyl, 1,1-dimethylallyl, 2-butenyl, 2-hexenyl, 2-phenylvinyl, 2-methoxyvinyl, 2-ethoxyvinyl, 2-chlorovinyl, phenyl, tolyl, xylyl, α-naphthyl, β-naphthyl, 4-diphenylyl, 2-, 3- or 4-chlorophenyl, 2,4- or 2,6-dichlorophenyl, 2,4,6-trichlorophenyl, 2-, 3- or 4-methylphenyl, 2,4- or 2,6-dimethylphenyl, 2,4,6-trimethylphenyl, 2-, 3- or 4-ethylphenyl, 2,4- or 2,6-diethylphenyl, 2-, 3- or 4-isopropylphenyl, 2-, 3- or 4-tert-butylphenyl, 2-, 3- or 4-methoxyphenyl, 2,4- or 2,6-dimethoxyphenyl, 2-, 3- or 4-ethoxyphenyl, methylnaphthyl, chloronaphthyl, ethoxynaphthyl, 2,6-dimethylphenyl, 2,4,6-trimethylphenyl, 2,4- or 2,6-dimethoxyphenyl, 2,4- or 2,6-dichlorophenyl, 2- or 4-nitrophenyl, 2,4- or 2,6-dinitrophenyl, 4-dimethylaminophenyl, 4-acetylphenyl, 2,4,6-trimethylbenzoyl, 2,6-dimethoxybenzoyl and 2,6-dichlorobenzoyl.

## Revendications

1. Procédé de préparation d'oxydes d'acylphosphine aromatiques (II), **caractérisé en ce qu'**on convertit des carboxyphosphines aromatiques (I) en les oxydes d'acylphosphine (II) en l'absence d'un catalyseur, à une température supérieure à 100°C, ou en présence d'un catalyseur, au-dessus de 80°C, pendant une durée de 5 minutes à 5 heures, 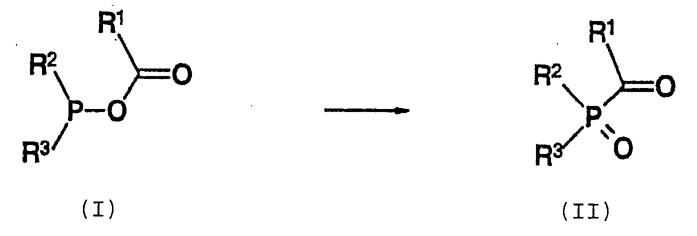 où
R² représente un groupe aryle en C₆-C₁₂ ou un hétérocycle aromatique pentagonal à hexagonal, présentant des atomes d'oxygène, d'azote et/ou de soufre, les radicaux cités pouvant être chacun substitués par des groupes aryle, alkyle, aryloxy, alkyloxy, des hétéroatomes et/ou des hétérocycles, et
R² et R³ représentent, indépendamment l'un de l'autre, un groupe alkyle en C₁-C₁₈, ou un groupe alcoxy en C₁-C₁₈, cycloalkyle en C₅-C₁₂, aryle en C₆-C₁₂, alcényle en C₂-C₁₈, alkyle en C₂-C₁₈ éventuellement interrompu par un ou plusieurs atomes d'oxygène et/ou de soufre et/ou un ou plusieurs groupes imino substitués ou non substitués, ou un hétérocycle pentagonal à hexagonal, présentant des atomes d'oxygène, d'azote et/ou de soufre, les radicaux cités pouvant être chacun substitués par des groupes aryle, alkyle, aryloxy, alkyloxy, des hétéroatomes et/ou des hétérocycles, ainsi qu'un métal, un groupe -O-cation⁺ ou un halogène.

2. Procédé suivant la revendication 1, **caractérisé en ce qu'**on met en oeuvre 5 à 100 % molaires de catalyseur par rapport à la matière de départ (I).

3. Procédé suivant la revendication 2, **caractérisé en ce que** le catalyseur est choisi parmi le groupe des catalyseurs de Friedel-Crafts, des liquides ioniques de type acide de Lewis, des catalyseurs nucléophiles, des chlorures d'acide, des anhydrides d'acide, des halogénures d'alkyle, des halogènes, des catalyseurs d'Arbusov, des catalyseurs présentant simultanément des propriétés d'acides de Lewis et de bases de Lewis et des métaux de transition ayant une affinité élevée vis-à-vis du phosphore.

4. Procédé suivant l'une des revendications précédentes, **caractérisé en ce que** R¹ est choisi parmi le groupe comportant les groupes phényle, tolyle, xylyle, α-naphtyle, β-naphtyle, 2-chlorophényle, 3-chlorophényle, 4-chlorophényle, 2,6-dichlorophényle, 2,4-dichlorophényle, 2,4,6-trichlorophényle, 2-méthylphényle, 3-méthylphényle, 4-méthylphényle, 2,6-diméthylphényle, 2,4-diméthylphényle, 2,4,6-triméthylphényle, 2-éthylphényle, 3-éthylphényle, 4-éthylphényle, 2,6-diéthylphényle, 2,4-diéthylphényle, 2-iso-propylphényle, 3-iso-propylphényle, 4-iso-propylphényle, 2-tert.-butylphényle, 3-tert.-butylphényle, 4-tert.-butylphényle, 2-méthoxyphényle, 3-méthoxyphényle, 4-méthoxyphényle, 2,6-diméthoxyphényle, 2,4-diméthoxyphényle, 2,6-diéthoxyphényle, 2,4-diéthoxyphényle, méthylnaphtyle, 2,6-diméthylphényle, 2,4,6-triméthylphényle, 2,6-diméthoxyphényle, 2,6-dichlorophényle, 4-bromophényle, 2-nitrophényle, 4-nitrophényle, 2,4-dinitrophényle, 2,6-dinitrophényle, 4-diméthylaminophényle, 4-acétylphényle, 2-furyle, 3-furyle, 2-thiophényle, 3-thiophényle, 2-pyrryle, 3-pyrryle et diméthylpyrryle.

5. Procédé suivant l'une des revendications précédentes, **caractérisé en ce que** R² et R³ sont, indépendamment l'un de l'autre, choisis parmi le groupe comportant les groupes 2,4,4-triméthylpentyle, benzyle, p-chlorobenzyle, 2,4-dichlorobenzyle, p-méthoxybenzyle, méthoxy, éthoxy, n-propyloxy, iso-propyloxy, n-butyloxy, iso-butyloxy, sec.-butyloxy, tert.-butyloxy, 6-hydroxy-1,4-dioxohexyle, 9-hydroxy-1,4,7-trioxononyle, 12-hydroxy-1,4,7,10-tétraoxododécyle, 6-méthoxy-1,4-dioxohexyle, 9-méthoxy-1,4,7-trioxononyle, 12-méthoxy-1,4,7,10-tétraoxododécyle, 6-éthoxy-1,4-dioxohexyle, 9-éthoxy-1,4,7-trioxononyle, 12-éthoxy-1,4,7,10-tétraoxododécyle, 8-hydroxy-1,5-dioxooctyle, 12-hydroxy-1,5,9-trioxooctyle, 16-hydroxy-1,5,9,13-tétraoxohexadécyle, 10-hydroxy-1,6-dioxodécyle, 15-hydroxy-1,6,11-trioxopentadécyle, vinyle, 1-propényle, allyle, méthallyle, 1,1-diméthylallyle, 2-butényle, 2-hexényle, 2-phénylvinyle, 2-méthoxyvinyle, 2-éthoxyvinyle, 2-chlorovinyle, phényle, tolyle, xylyle, α-naphtyle, β-naphtyle, 4-diphénylyle, 2-chlorophényle, 3-chlorophényle, 4-chlorophényle, 2,4-dichlorophényle, 2,6-dichlorophényle, 2,4,6-trichlorophényle, 2-méthylphényle, 3-méthylphényle, 4-méthylphényle, 2,4-diméthylphényle, 2,6-diméthylphényle, 2,4,6-triméthylphényle, 2-éthylphényle, 3-éthylphényle, 4-éthylphényle, 2,4-diéthylphényle, 2,6-diéthylphényle, 2-iso-propylphényle, 3-iso-propylphényle, 4-iso-propylphényle, 2-tert.-butylphényle, 3-tert.-butylphényle, 4-tert.-butylphényle, 2-méthoxyphényle, 3-méthoxyphényle, 4-méthoxyphényle, 2,4-diméthoxyphényle, 2,6-diméthoxyphényle, 2-éthoxyphényle, 3-éthoxyphényle, 4-éthoxyphényle, méthylnaphtyle, chloronaphtyle, éthoxynaphtyle, 2,6-diméthylphényle, 2,4,6-triméthylphényle, 2,4-diméthoxyphényle, 2,6-diméthoxyphényle, 2,4-dichlorophényle, 2,6-dichlorophényle, 2-nitrophényle, 4-nitrophényle, 2,4-dinitrophényle, 2,6-dinitrophényle, 4-diméthylaminophényle, 4-acétylphényle, 2,4,6-triméthylbenzoyle, 2,6-diméthoxybenzoyle et 2,6-dichlorobenzoyle.
